# EUROPEAN PATENT SPECIFICATION

(11) **EP 3 147 175 B1**
(45) Date of publication and mention of the grant of the patent: **29.08.2018**
(21) Application number: 15306475.3
(22) Date of filing: 22.09.2015
(51) Int. Cl.: B61L 15/00, B61L 15/02, B61C 17/12, B61G 7/14, B60L 15/32

(54) **RAILWAY TRAIN WITH REMOTE UNCOUPLING AND TRACTION CUT-OUT BASED ON TRAIN END DETECTION**
EISENBAHNZUG MIT FERNENTKUPPLUNG UND MIT TRAKTIONSABSCHALTUNG BASIEREND AUF DER ZUGSCHLUSSERKENNUNG
TRAIN FERROVIAIRE AVEC DÉCOUPLAGE À DISTANCE ET AVEC COUPURE DE TRACTION SUR LA BASE DE LA DÉTECTION DE L'EXTRÉMITÉ DU TRAIN

(43) Date of publication of application: 29.03.2017
(73) Proprietor: ALSTOM Transport Technologies, 93400 Saint-Ouen (FR)
(72) Inventor: FELLER, Reiner, 38116 Braunschweig (DE); HORSTMANN, Matthias, 38527 Meine (DE)
(74) Representative: Lavoix

(56) References cited:
- EP-A1- 2 266 860
- EP-A2- 2 133 254
- DE-A1- 3 146 563
- GB-A- 1 345 955
- US-A1- 2014 183 304
- KUMUTAT B ET AL: "Das Diagnosesystem Cobra", ETR EISENBAHNTECHNISCHE RUNDSCHAU, HESTRA-VERLAG. DARMSTADT, DE, vol. 53, no. 10/2004, 1 October 2004 (2004-10-01), pages 648-659, XP001537740,

## Description

The present invention concerns the modification of the configuration of railway trains by the coupling and uncoupling of individual carriages.

The operation of railway trains often involves the uncoupling of carriages that are no longer needed for the next journey of the train. Up to now, in order to perform the uncoupling, the train driver needs to leave his driver's cab, walk to the appropriate coupling assembly, unlock the coupling assembly, check that the uncoupling was successful, and then return to his driver's cab.

This task is time consuming and increases the train's immobilisation time. Since the uncoupling of carriages is done frequently during train operation the corresponding aggregated time loss can be substantial. This time loss could be prevented by providing a coupling remote control in the driver's cab. Such a coupling remote control would allow the driver to uncouple the carriages without leaving his driver's cab. To the applicant's knowledge, such a remote uncoupling solution has however never been adopted because of safety concerns. Indeed, when the driver remains in his cab and performs the uncoupling remotely, he can no longer see in person whether the uncoupling has been successful. The document GB 1 345 955 discloses a switching arrangement for the remote control and monitoring operational procedure and mechanisms of rail vehicles having automatic couplings. Accordingly, it is an object of the present invention to provide a railway train where the uncoupling of carriages can be carried out remotely and safely.

According to the invention, this object is achieved with a railway train comprising:
- a driving carriage;
- a driven carriage;
- an automatic coupling assembly coupling the driving carriage to the driven carriage; and
- a train control system for controlling the operation of the railway train,
wherein the train control system includes:
- a coupling remote control adapted to remotely control the locking and unlocking of the automatic coupling assembly and thus the coupling and uncoupling of the driving carriage to the driven carriage;
- a train end detection device adapted to detect the end of a railway train; and
- a traction cut-out controlling device adapted to automatically cut-out the traction of the driving carriage upon uncoupling of the driving carriage from the driven carriage by the coupling remote control, and to automatically remove the traction cut-out upon detection, by the train end detection device, of an end of the driving carriage as the end of a new railway train.

Thanks to the traction cut-out controlling device of the present invention, the new railway train (i.e. the train consisting of the carriages that remain coupled together after the uncoupling process) is immobilised until its end has been safely detected, meaning that the uncoupling was successful. Hence, there is no risk that the train driver drives off with an ill-configured new railway train. At the same time, thanks to the coupling remote control of the present invention, the train driver can perform the uncoupling from his cab, which saves time.

According to preferred embodiments, the inventive railway train has one, several or all of the following features, in all technically possible combinations:
- the traction cut-out controlling device is implemented in the form of a traction cut-out controlling electrical circuit with relays, in particular electromechanical relays;
- the traction cut-out controlling electrical circuit comprises a traction cut-out relay adapted to switch into a traction cut-out state upon uncoupling of the driving carriage from the driven carriage, and to switch into a traction state upon detection of the new train end;
- the traction cut-out controlling electrical circuit further comprises a train end detection relay adapted to switch the traction cut-out relay between the traction cut-out state and the traction state;
- each carriage includes at least one end light, wherein the train end detection device is adapted to switch on the end light of the driving carriage once it has detected the driving carriage as the end of a new railway train, wherein the train end detection relay is adapted to switch into a train end detected state when the driving carriage end light is switched on, and to switch into a train end undetected state when the driving carriage end light is switched off, and wherein the switching of the train end detection relay between its train end detected state and its train end undetected state switches the traction cut-out relay between its traction state and its traction cut-out state;
- an electrical power line and an electrical train control line for setting a traction cut-out, said traction cut-out relay being adapted to electrically connect the electrical power line to the electrical train control line to thereby set a traction cut-out, and to electrically disconnect the electrical power line from the electrical train control line to thereby remove a traction cut-out;
- an electrical component, such as a diode, connected in series with the traction cut-out relay and adapted to inhibit any false feedback from the electrical train control line into the traction cut-out controlling electrical circuit;
- the driving carriage comprises a driver's cab, wherein the train control system includes a driver interface arranged in the driver's cab and allowing the train driver to interact with the train control system, wherein the traction cut-out controlling device is adapted to send a traction status signal indicating the presence or absence of a traction cut-out to the driver interface, and wherein the driver interface is adapted to receive and process said traction status signal, and to notify the train driver about the presence or absence of a traction cut-out based on said received traction status signal;
- the railway train is an electric multiple unit, preferably for passenger transport.

A preferred embodiment of the invention will now be described in detail with reference to the appended drawings, wherein:
Fig. 1 shows a railway train according to the invention before the uncoupling of one its carriages;
Fig. 2 shows the railway train of Fig. 1, one of his carriages having been uncoupled;
Fig. 3 is a block diagram of the train control system of the invention; and
Fig. 4 shows a preferred embodiment of the traction cut-out controlling device of the invention.

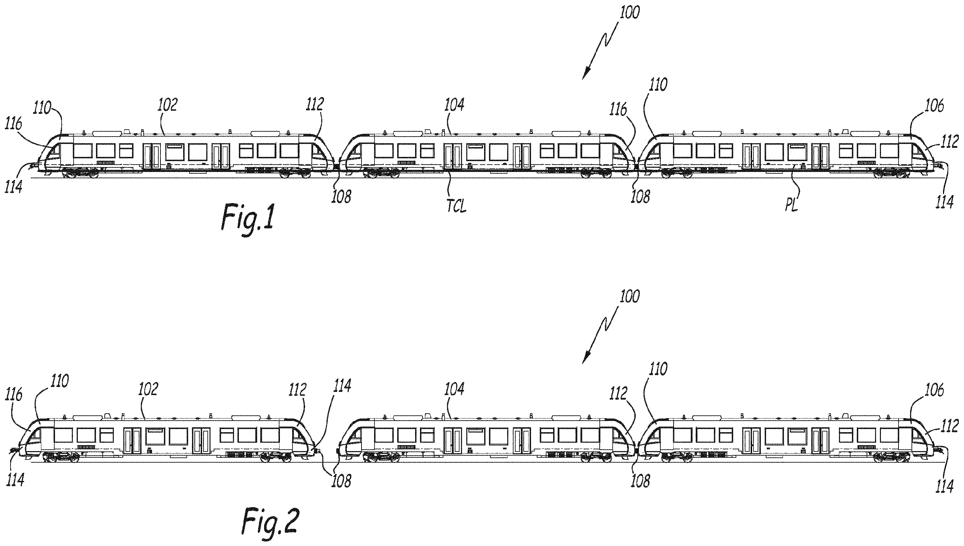

Figure 1 shows a railway train 100. This railway train is an Electric Multiple Unit (EMU) for passenger transport. The railway train 100 is preferably operated as a regional or suburban train. Examples of such trains are manufactured and sold by the applicant under the tradename Alstom Coradia.

The railway train 100 comprises an electrical power line PL and an electrical train control line TCL for setting a traction cut-out. The PL is connected to the local battery in each carriage and the TCL extends throughout the length of the railway train 100.

The railway train 100 consists of up to three carriages, namely a front carriage 102, a middle carriage 104 and a rear carriage 106. In Fig. 1, the three carriages 102, 104 and 106 are coupled together via two automatic coupling assemblies 108. Each automatic coupling assembly 108 includes two automatic couplers, two opposite to each other between carriage 102 and 104 and two opposite to each other between carriage 104 and 106. Fig. 1 depicts a railway train in a three carriage configuration, ready to depart.

Each carriage 102, 104, 106 has a first end 110 and a second end 112. Each carriage end 110 and 112 is fitted with a pair of end lights 114. A pair of end lights 114 is switched on when the corresponding carriage end 110, 112 corresponds to the rear end of the railway train in the current train configuration.

In Fig. 1, it is the pair of end lights 114 of the second end 112 of the rear carriage 106 that is switched on, thus signalling that the second end 112 of rear carriage 106 corresponds to the rear end of the railway train 100.

Each carriage 102, 104 and 106 also comprises two driver's cabs 116, one at the first end 110, and one at the second end 112.

Fig. 2 shows the railway train 100 in a different configuration, wherein one of the automatic coupling assemblies 108 has been released such that the front carriage 102 is uncoupled from the middle carriage 104 and the rear carriage 106. In this configuration, the front carriage 102 is ready to depart on its own as a new railway train without the middle carriage 104 and the rear carriage 106.

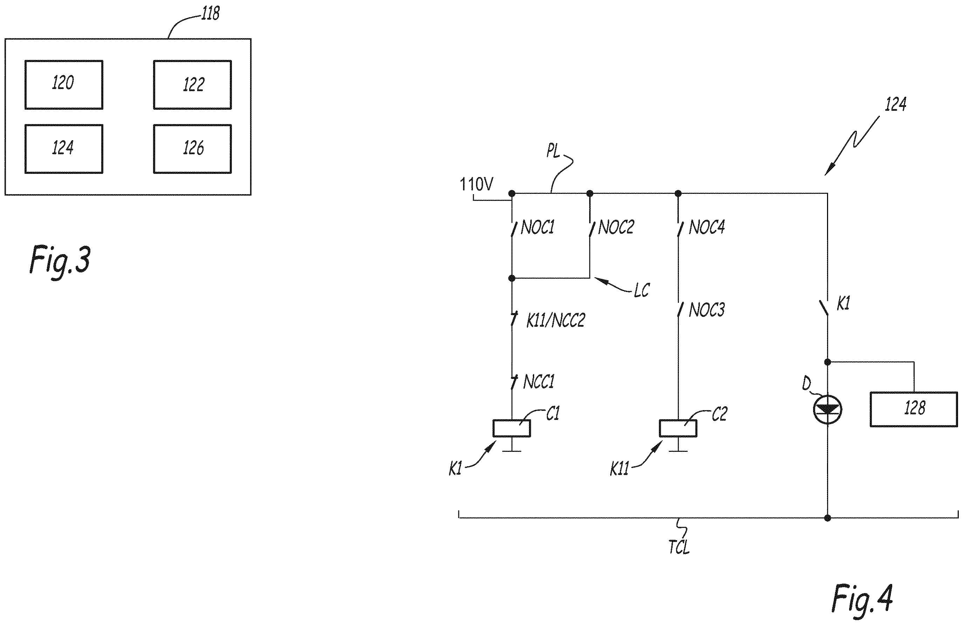

Fig. 3 is a block diagram of the train control system 118 of the railway train 100. Train control system 118 is a hardware and software assembly that is installed in railway train 100 and controls the operation of the railway train 100.

Train control system 118 includes a coupling remote control 120, a train end detection device 122, a traction cut-out controlling device 124 and a driver interface 126.

The coupling remote control 120 is adapted to remotely control the locking and unlocking of the automatic coupling assemblies 108 and thus the coupling and uncoupling of the carriages 102, 104 and 106.

The train end detection device 122 is adapted to detect the end of the railway train in the current train configuration.

The driver interface 126 is arranged in the driver's cabs 116. It allows the train driver to interact with the train control system 118.

The traction cut-out controlling device 124 is shown in more detail in Fig. 4. It consists of a traction cut-out controlling electrical circuit 124 with relays, in particular electromechanical relays. The electrical circuit 124 electrically interconnects the power line PL and the train control line TCL "traction cut-out". The electrical circuit 124 has a traction cut-out relay K1 and a train end detection relay K11.

The traction cut-out relay K1 is adapted to electrically connect the electrical power line PL to the electrical train control line TCL to thereby set a traction cut-out, and to electrically disconnect the electrical power line PL from the electrical train control line TCL to thereby remove a traction cut-out.

The traction cut-out relay K1 includes a relay coil C1. The relay coil C1 is connected to the power line PL via a series of two normally closed switches NCC1 and NCC2 and a self-holding circuit LC. The normally closed switch NCC2 corresponds to the train end detection relay K11. The normally closed switch NCC1 is actuated via a desk key switch located in a driver's cab 116. The self-holding circuit LC is triggered by an uncoupling process. It includes two normally open contacts NOC1 and NOC2 that are arranged in parallel.

The train end detection relay K11 includes a relay coil C2. The relay coil C2 is connected to the power line PL via a series of two normally open switches NOC3 and NOC4. The switches NOC3 and NOC4 are triggered by sensors (not shown) that detect a new train end by detecting the activation of a pair of end lights 114. The switch NOC3 is triggered by the activation of the right one of a pair of end lights 114. The switch NOC4 is triggered by the activation of the left one of a pair of end lights 114.

The traction cut-out controlling electrical circuit 124 is also connected to a Remote Input Output Module or RIOM 128. The RIOM 128 is adapted to register a traction cut-out that has been set by the electrical circuit 124. The RIOM signals a registered traction cut-out and the release thereof to the driver interface 126.

The traction cut-out controlling electrical circuit 124 is connected to the TCL via an electrical component, such as a diode D. The diode D inhibits any false feedback from the electrical train control line TCL into the traction cut-out controlling electrical circuit 124.

In the following, we will now describe the remote uncoupling process according to the invention, including the operation of the traction cut-out controlling electrical circuit 124.

Let us assume that the train driver of the coupled railway train 100 shown in Fig. 1 is sitting in the driver's cab 116 of the front carriage 102 that is close to the uncoupled front end 110 of said front carriage 102. The train driver wants to uncouple the middle carriage 104 and the rear carriage 106 from the front carriage 102. In the following, the front carriage 102 will be called the driving carriage, and the middle carriage 104 will be called the driven carriage.

The train driver starts the uncoupling process remotely without leaving his driver's cab 116, using the coupling remote control 120. More precisely, the driver selects an automatic coupling assembly 108 that he wants to unlock. Then the train driver turns a desk key switch arranged in his driver's cab 116 into an uncoupling position.

This initiation of the uncoupling process closes the normally open contact NOC1. In this phase of the uncoupling process, the new train end has not yet been detected. Accordingly, the normally closed contact NCC2 of the relay K11 is closed. Likewise, the normally closed contact NCC1, which is controlled by a desk key switch located in a driver's cab next to the automatic coupling assembly 108 that is to be uncoupled, is also closed. As a consequence, the relay coil C1 is energised. This activates the traction cut-out relay K1. The traction cut-out relay K1 establishes an electrical connection between the PL and the TCL, thus setting a traction cut-out.

The self-holding contact NOC2 keeps the traction cut-out relay K1 active even after the normally open contact NOC1 has returned to its open state.

Once the new train end has been detected and the end lights 114 of the driving carriage 102 have been activated, the switches NOC3 and NOC4 will close. This activates the train end detection relay K11. As a result, the normally closed switch NCC2 opens and the traction cut-out relay K1 is deactivated. This in turn opens the self-holding contact NOC2 and removes the traction cut-out.

In case of a malfunction, the train driver can remove the traction cut-out manually by going to a driver's cab 116 next to the relevant automatic coupling assembly 108 and turning the corresponding desk key switch. This opens the normally closed switch NCC1.

## Claims

1. A railway train (100) comprising:
- a driving carriage (102);
- a driven carriage (104);
- an automatic coupling assembly (108) coupling the driving carriage to the driven carriage; and
- a train control system (118) for controlling the operation of the railway train, wherein the train control system (118) includes:
- a coupling remote control (120) adapted to remotely control the locking and unlocking of the automatic coupling assembly (108) and thus the coupling and uncoupling of the driving carriage to the driven carriage; and
- a train end detection device (122) adapted to detect the end of a railway train; **characterized in that** the railway train comprises
- a traction cut-out controlling device (124) adapted to automatically cut-out the traction of the driving carriage (102) upon uncoupling of the driving carriage from the driven carriage by the coupling remote control (120), and to automatically remove the traction cut-out upon detection, by the train end detection device (122), of an end of the driving carriage (102) as the end of a new railway train.

2. The railway train (100) of claim 1, wherein the traction cut-out controlling device (124) is implemented in the form of a traction cut-out controlling electrical circuit with relays (K1, K11), in particular electromechanical relays.

3. The railway train (100) of claim 2, wherein the traction cut-out controlling electrical circuit (124) comprises a traction cut-out relay (K1) adapted to switch into a traction cut-out state upon uncoupling of the driving carriage (102) from the driven carriage (104), and to switch into a traction state upon detection of the new train end.

4. The railway train (100) of claim 3, wherein the traction cut-out controlling electrical circuit (124) further comprises a train end detection relay (K11) adapted to switch the traction cut-out relay (K1) between the traction cut-out state and the traction state.

5. The railway train (100) of claim 4, wherein each carriage (102, 104) includes at least one end light (114), wherein the train end detection device (122) is adapted to switch on the end light (114) of the driving carriage (102) once it has detected the driving carriage as the end of a new railway train, wherein the train end detection relay (K11) is adapted to switch into a train end detected state when the driving carriage end light (114) is switched on, and to switch into a train end undetected state when the driving carriage end light (114) is switched off, and wherein the switching of the train end detection relay (K11) between its train end detected state and its train end undetected state switches the traction cut-out relay (K1) between its traction state and its traction cut-out state.

6. The railway train (100) of any one of claims 3 to 5, further comprising an electrical power line (PL) and an electrical train control line (TCL) for setting a traction cut-out, said traction cut-out relay (K1) being adapted to electrically connect the electrical power line (PL) to the electrical train control line (TCL) to thereby set a traction cut-out, and to electrically disconnect the electrical power line (PL) from the electrical train control line (TCL) to thereby remove a traction cut-out.

7. The railway train (100) of claim 6, further comprising an electrical component (D), such as a diode, connected in series with the traction cut-out relay (k1) and adapted to inhibit any false feedback from the electrical train control line (TCL) into the traction cut-out controlling electrical circuit (124).

8. The railway train (100) of any one of the previous claims, wherein the driving carriage (102) comprises a driver's cab (116), wherein the train control system (118) includes a driver interface (126) arranged in the driver's cab and allowing the train driver to interact with the train control system (118), wherein the traction cut-out controlling device (124) is adapted to send a traction status signal indicating the presence or absence of a traction cut-out to the driver interface (126), and wherein the driver interface (126) is adapted to receive and process said traction status signal, and to notify the train driver about the presence or absence of a traction cut-out based on said received traction status signal.

9. The railway train (100) of any one of the previous claims, wherein the railway train is an electric multiple unit, preferably for passenger transport.

## Patentansprüche

1. Eisenbahnzug (100), Folgendes umfassend:
- einen Triebwagen (102),
- einen angetriebenen Wagen (104),
eine automatische Kupplungsanordnung (108), die den Triebwagen mit dem angetriebenen Wagen kuppelt, und
- ein Zugsteuersystem (118) zum Steuern des Betriebes des Eisenbahnzuges,
wobei das Zugsteuersystem (118) Folgendes beinhaltet:
- eine Kupplungsfernsteuerung (120), die dafür eingerichtet ist, das Arretieren und Lösen der automatischen Kupplungsanordnung (108) und somit das An- und Abkuppeln des Triebwagens an den / von dem angetriebenen Wagen fernzusteuern, und
- eine Zugende-Erkennungsvorrichtung (122), die dafür eingerichtet ist, das Ende eines Eisenbahnzuges zu erkennen,
**dadurch gekennzeichnet, dass** der Eisenbahnzug Folgendes umfasst:
- eine Zugkraftunterbrechungs-Steuervorrichtung (124), die dafür eingerichtet ist, die Zugkraft des Triebwagens (102) nach dem Abkuppeln des Triebwagens vom angetriebenen Wagen automatisch durch die Kupplungsfernsteuerung (120) zu unterbrechen und die Zugkraftunterbrechung nach der Erkennung eines Ende des Triebwagens (102) als das Ende eines neuen Eisenbahnzuges durch die Zugende-Erkennungsvorrichtung (122) automatisch zu beseitigen.

2. Eisenbahnzug (100) nach Anspruch 1, wobei die Zugkraftunterbrechungs-Steuervorrichtung (124) in Form einer die Zugkraftunterbrechung steuernden elektrischen Schaltung mit Relais (K1, K11), insbesondere elektromechanischen Relais, umgesetzt ist.

3. Eisenbahnzug (100) nach Anspruch 2, wobei die elektrische Zugkraftunterbrechungs-Steuerschaltung (124) ein Zugkraftunterbrechungs-Relais (K1) umfasst, das dafür eingerichtet ist, nach dem Abkuppeln des Triebwagens (102) von dem angetriebenen Wagen (104) in einen Zugkraftunterbrechungszustand zu schalten und nach dem Erkennen des neuen Zugendes in einen Zugkraftzustand zuschalten.

4. Eisenbahnzug (100) nach Anspruch 3, wobei die elektrische Zugkraftunterbrechungs-Steuerschaltung (124) ferner ein Zugende-Erkennungsrelais (K11) umfasst, das dafür eingerichtet ist, das Zugkraftunterbrechungs-Relais (K1) zwischen dem Zugkraftunterbrechungszustand und dem Zugkraftzustand umzuschalten.

5. Eisenbahnzug (100) nach Anspruch 4, wobei jeder Wagen (102, 104) mindestens ein Schlusslicht (114) beinhaltet, wobei die Zugende-Erkennungsvorrichtung (122) dafür eingerichtet ist, das Schlusslicht (114) des Triebwagens (102) einzuschalten, sobald sie den Triebwagen als das Ende des neuen Eisenbahnzuges erkannt hat, wobei das Zugende-Erkennungsrelais (K11) dafür eingerichtet ist, in einen Zustand eines erkannten Zugendes zu schalten, wenn das Triebwagen-Schlusslicht (114) eingeschaltet ist, und in einen Zustand eines nicht erkannten Zugendes zu schalten, wenn das Triebwagen-Schlusslicht (114) ausgeschaltet ist, und wobei das Umschalten des Zugende-Erkennungsrelais (K11) zwischen seinem Zustand eines erkannten Zugendes und seinem Zustand eines nicht erkannten Zugendes das Zugkraftunterbrechungs-Relais (K1) zwischen seinem Zugkraftzustand und seinem Zugkraftunterbrechungszustand umschaltet.

6. Eisenbahnzug (100) nach einem der Ansprüche 3 bis 5, ferner eine Stromleitung (PL) und eine elektrische Zugsteuerleitung (TCL) für das Einstellen einer Zugkraftunterbrechung umfassend, wobei das Zugkraftunterbrechungs-Relais (K1) dafür eingerichtet ist, die Stromleitung (PL) mit der elektrischen Zugsteuerleitung (TCL) elektrisch zu verbinden, um dadurch eine Zugkraftunterbrechung einzustellen, und die Stromleitung (PL) von der elektrische Zugsteuerleitung (TCL) elektrisch zu trennen, um dadurch eine Zugkraftunterbrechung zu beseitigen.

7. Eisenbahnzug (100) nach Anspruch 6, ferner eine elektrische Komponente (D) umfassend, wie beispielsweise eine Diode, die mit dem Zugkraftunterbrechungs-Relais (K1) in Reihe geschaltet und dafür eingerichtet ist, eine falsche Rückkopplung von der elektrischen Zugsteuerleitung (TCL) in die elektrische Zugkraftunterbrechungs-Steuerschaltung (124) zu verhindern.

8. Eisenbahnzug (100) nach einem der vorhergehenden Ansprüche, wobei der Triebwagen (102) einen Führerstand (116) umfasst, wobei das Zugsteuersystem (118) eine Führerschnittstelle (126) beinhaltet, die im Führerstand angeordnet ist und es dem Zugführer gestattet, mit dem Zugsteuersystem (118) zu interagieren, wobei die Zugkraftunterbrechungs-Steuervorrichtung (124) dafür eingerichtet ist, ein Zugkraft-Zustandssignal zu senden, welches das Vorhandensein oder Nichtvorhandensein einer Zugkraftunterbrechung an der Führerschnittstelle (126) anzeigt, und wobei die Führerschnittstelle (126) dafür eingerichtet ist, das Zugkraft-Zustandssignal zu empfangen und zu verarbeiten und den Zugführer basierend auf dem empfangenen Zugkraft-Zustandssignal über das Vorhandensein oder Nichtvorhandensein einer Zugkraftunterbrechung zu benachrichtigen.

9. Eisenbahnzug (100) nach einem der vorhergehenden Ansprüche, wobei der Eisenbahnzug ein elektrischer Triebzug ist, vorzugsweise für den Passagiertransport.

## Revendications

1. Train ferroviaire (100) comprenant :
- une voiture d'entraînement (102) ;
- une voiture entraînée (104) ;
- un ensemble de couplage automatique (108) couplant la voiture d'entraînement à la voiture entraînée ; et
- un système de commande de train (118) pour commander le fonctionnement du train ferroviaire, dans lequel le système de commande de train (118) inclut :
- une commande à distance de couplage (120) adaptée pour commander à distance le verrouillage et le déverrouillage de l'ensemble de couplage automatique (108) et de ce fait, le couplage et le découplage de la voiture d'entraînement avec la voiture entraînée ; et
- un dispositif de détection d'extrémité de train (122) adapté pour détecter l'extrémité d'un train ferroviaire ;
**caractérisé en ce que** le train ferroviaire comprend
- un dispositif de commande de coupure de traction (124) adapté pour couper automatiquement la traction de la voiture d'entraînement (102) lors du découplage de la voiture d'entraînement de la voiture entraînée par la commande à distance de couplage (120), et pour supprimer automatiquement la coupure de traction lors de la détection, par le dispositif de détection d'extrémité de train (122), d'une extrémité de la voiture d'entraînement (102) en tant qu'extrémité d'un nouveau train ferroviaire.

2. Train ferroviaire (100) selon la revendication 1, dans lequel le dispositif de commande de coupure de traction (124) est mis en oeuvre sous la forme d'un circuit électrique de commande de coupure de traction avec des relais (K1, K11), en particulier des relais électromécaniques.

3. Train ferroviaire (100) selon la revendication 2, dans lequel le circuit électrique de commande de coupure de traction (124) comprend un relais de coupure de traction (K1) adapté pour commuter dans un état de coupure de traction lors du découplage de la voiture d'entraînement (102) de la voiture entraînée (104), et pour commuter dans un état de traction lors de la détection de la nouvelle extrémité de train.

4. Train ferroviaire (100) selon la revendication 3, dans lequel le circuit électrique de commande de coupure de traction (124) comprend en outre un relais de détection d'extrémité de train (K11) adapté pour commuter le relais de coupure de traction (K1) entre l'état de coupure de traction et l'état de traction.

5. Train ferroviaire (100) selon la revendication 4, dans lequel chaque voiture (102, 104) inclut au moins un feu d'extrémité (114), dans lequel le dispositif de détection d'extrémité de train (122) est adapté pour allumer le feu d'extrémité (114) de la voiture d'entraînement (102) une fois qu'il a détecté la voiture d'entraînement en tant qu'extrémité d'un nouveau train ferroviaire, dans lequel le relais de détection d'extrémité de train (K11) est adapté pour commuter dans un état détecté d'extrémité de train lorsque le feu d'extrémité de voiture d'entraînement (114) est allumé, et pour commuter dans un état non détecté d'extrémité de train lorsque le feu d'extrémité de voiture d'entraînement (114) est éteint, et dans lequel la commutation du relais de détection d'extrémité de train (K11) entre son état détecté d'extrémité de train et son état non détecté d'extrémité de train commute le relais de coupure de traction (K1) entre son état de traction et son état de coupure de traction.

6. Train ferroviaire (100) selon l'une quelconque des revendications 3 à 5, comprenant en outre une ligne électrique (PL) et une ligne de commande de train électrique (TCL) pour régler une coupure de traction, ledit relais de coupure de traction (K1) étant adapté pour connecter électriquement la ligne d'alimentation électrique (PL) à la ligne de commande de train électrique (TCL) afin de régler ainsi une coupure de traction, et pour déconnecter électriquement la ligne d'alimentation électrique (PL) de la ligne de commande de train électrique (TCL) afin de supprimer ainsi une coupure de traction.

7. Train ferroviaire (100) selon la revendication 6, comprenant en outre un composant électrique (D), tel qu'une diode, connecté en série avec le relais de coupure de traction (k1) et adapté pour inhiber toute fausse rétroaction de la ligne de commande de train électrique (TCL) dans le circuit électrique de commande de coupure de traction (124).

8. Train ferroviaire (100) selon l'une quelconque des revendications précédentes, dans lequel la voiture d'entraînement (102) comprend une cabine de conduite (116), dans lequel le système de commande de train (118) inclut une interface conducteur (126) agencée dans la cabine de conduite et permettant au conducteur de train d'interagir avec le système de commande de train (118), dans lequel le dispositif de commande de coupure de traction (124) est adapté pour envoyer un signal d'état de traction indiquant la présence ou l'absence d'une coupure de traction à l'interface conducteur (126), et dans lequel l'interface conducteur (126) est adaptée pour recevoir et traiter ledit signal d'état de traction, et pour notifier le conducteur de train de la présence ou de l'absence d'une coupure de traction sur la base dudit signal d'état de traction reçu.

9. Train ferroviaire (100) selon l'une quelconque des revendications précédentes, dans lequel le train ferroviaire est une unité multiple électrique, de préférence pour le transport de passagers.
